# EUROPÄISCHE PATENTSCHRIFT

(11) **EP 1 797 464 B1**
(45) Veröffentlichungstag und Bekanntmachung des Hinweises auf die Patenterteilung: **01.01.2014**
(21) Anmeldenummer: 05769761.7
(22) Anmeldetag: 04.08.2005
(51) Int. Cl.: G01V 3/10

(54) **DETEKTOR ZUR ORTUNG METALLISCHER OBJEKTE**
DETECTOR FOR LOCATING METALLIC OBJECTS
DÉTECTEUR POUR LA LOCALISATION D'OBJETS MÉTALLIQUES

(30) Priorität: 29.09.2004 DE 102004047190
(43) Veröffentlichungstag der Anmeldung: 20.06.2007
(73) Patentinhaber: ROBERT BOSCH GMBH, 70442 Stuttgart (DE)
(72) Erfinder: SKULTETY-BETZ, Uwe, 70771 Leinfelden-Echterdingen (DE); HAASE, Bjoern, 70182 Stuttgart (DE)
(86) Internationale Anmeldenummer: PCT/EP2005/053827
(87) Internationale Veröffentlichungsnummer: WO 2006/034911

(56) Entgegenhaltungen:
- DE-A1- 3 615 652
- DE-A1- 4 000 018
- US-A- 5 786 696

## Beschreibung

Die vorliegende Erfindung betrifft einen Detektor zur Ortung metallischer Objekte nach dem Oberbegriff des Anspruchs 1.

### Stand der Technik

Detektoren zur Ortung von in Bauwerkstoffen verborgenen, metallischen Objekten arbeiten derzeit in der Regel mit induktiven Verfahren. Hierbei wird ausgenutrt, dass sowohl leitfähige als auch ferromagnetische Werkstoffe die Eigenschaften einer in der Umgebung angebrachten, elektromagnetischen Spule beeinflussen. Die von metallischen Gegenständen hervorgerufenen Veränderungen der induktiven Eigenschaften werden von einer Empfangsschaltung eines solchen Detektors registriert. Auf diese Weise lassen sich beispielsweise in einer Wand eingeschlossene, metallische Gegenstände mittels einer oder mehrerer über die Wand hinweg geführter Spulen orten.

Eine technische Schwierigkeit bei der Detektion metallischer Objekte besteht darin, dass die Rückwirkung der zu ortenden Gegenstände auf die Spule bzw. Spulen der Detektoranordnung betraglich sehr klein ist. Dies trifft vor allem für den Einfluss von nicht ferromagnetischen Objekten, wie beispielsweise dem technisch wichtigen Kupfer, zu. Dies führt dazu, dass die induktive Wirkung der Spulen untereinander deutlich größer sein kann, als die durch einen eingeschlossenen Gegenstand erzeugt Induktion in der Empfangsspule.

Die auf einem induktiven Verfahren basierenden Detektoren haben daher in der Regel einen hohen Offset, d. h. ein hohes an der Empfangsspule des Detektors abgreifbares Signal, welches bereits ohne Einfluss eines externen, metallischen Gegenstands von der Empfangsschaltung des Detektors gemessen wird. Ein solcher hoher Offset macht es schwierig, sehr kleine induktive Änderungen, welche durch einen in die Nähe des Detektors gebrachten metallischen Gegenstand verursacht werden, zu detektieren. Aus dem Stand der Technik sind Sensoranordnungen für induktive Sensoren bzw. Detektoren bekannt, die ein Kompensation des durch die Spulen selbst induzierten Signals ermöglichen.

Die Notwendigkeit eine sehr kleine Änderung der Induktivität auf einem sehr großen Offset-Signal zu detektieren, setzt darüber hinaus den Einsatz eng tolerierter und damit teuerer Bauelemente voraus und erfordert zudem eine sehr rauscharme Analogelektronik, die die Kosten für ein solches Ortungsgerät deutlich erhöht. Nicht eingehaltene Montage- oder Fertigungstoleranzen sowie ein Driften einzelner Komponenten gegeneinander führen so unweigerlich zu einer Verfälschung des Messergebnisses einer solchen Vorrichtung.

Um dieser Offsetproblematik zu begegnen, sind im Stand der Technik verschiedene Ansätze bekannt, welche alle gemeinsam zum Ziel haben, das Sensorsignal welches bei Abwesenheit metallischer Objekte vorhanden ist zu reduzieren und somit die relativen Signaländerungen zu vergrößern.

Oft wird dabei ein mehrstufiger Ansatz gewählt, wobei z.B. in einem ersten Schritt eine Anordnung von Sensorspulen verwendet wird, welche in der Lage ist, den Signaloffset im Idealfall bereits vollständig zu beseitigen, bzw. zu kompensieren. Die in der Praxis erreichbare Kompensationsgüte hängt jedoch vielfach z.B. von Fertigungstoleranzen ab, so dass eine vollständige Beseitigung des Signaloffsets vielfach ein weiteres Verfahren, gewissermaßen zur Feinkompensation erforderlich macht.

Die bekannten Verfahren zur Kompensation von Fertigungs- bzw. Montagetoleranzen für induktive Sensoren in Kompensationsanordnung basieren im wesentlichen darauf, dass die im Detektorsystem induzierten Fehlerspannungen dadurch kompensiert werden, dass entweder die Geometrie des Erregermagnetfelds durch einen Abgleichprozess korrigiert wird, oder ein Korrekturspannungssignal erzeugt wird. Ein Beispiel für das erstgenannte Kompensationsverfahren liefert dabei die EP 1092989, ein Beispiel für das zweite Kompensationsverfahren ist durch die US 5,729,143 gegeben.
Aus der US 5,729,143 ist ein Detektor bekannt, dessen Ziel es ist, den zuvor angesprochenen Offset des Messsignals möglichst weitgehend zu unterdrücken. Zu diesem Zweck weist der Detektor der US 5,729,143 eine Sendespule mit einem Sender, sowie eine Empfangsspule mit einem Empfänger auf. Die Sendespule und die Empfangsspule des Detektors sind in der Weise miteinander induktiv gekoppelt, dass sie sich teilweise gegenseitig überlappen. Die Sendespule wird vom Sender mit einem Wechselstrom gespeist. Diese stromdurchflossene Sendespule erregt durch ihre induktive Kopplung mit der Empfangsspule in dieser einen ersten Teilfluss in der Überlappungsfläche der beiden Spulen und einen zweiten Teilfluss in der restlichen Fläche der Empfangsspule. Der Abstand zwischen den Zentren von Sendespule und Empfangsspule kann nun so gewählt werden, dass sich die beiden Teilflüsse, welche ein entgegengesetztes Vorzeichen haben, gegenseitig kompensieren. Ist dies der Fall, so induziert die stromdurchflossene Sendespule - wenn kein externer, metallischer Gegenstand in der Nähe der Spulenanordnung vorhanden ist - keinen Strom in der Empfangsspule, so dass der Empfänger in diesem Idealfall auch kein Offset-Signal messen würde. Erst wenn die Spulenanordnung in die Nähe eines metallischen Gegenstands gebracht wird, werden die von der Sendespule erzeugten Feldlinien gestört, so dass nun in der Empfangsspule ein nicht verschwindender Fluss angeregt wird, der ein Messsignal in der Empfangsspule erzeugt, welches unbeeinflusst von einem Offset-Signal ist und vom Empfänger ausgewertet werden kann.

Dabei ist der relative Abstand der Zentren von Sendespule und Empfangsspule ein äußerst kritischer Parameter, so dass sich die idealer Weise anzunehmende Abwesenheit einer induzierten Spannung in der Empfängerspule in der Praxis nur mit großem Aufwand realisieren lässt. Es hat sich gezeigt, dass eine hinreichende Kompensation der Flusskomponenten in der Praxis einer Serienfertigung nicht realisiert werden kann.

Aus diesem Grund schlägt die US 5,729,143 eine elektronische Schaltung vor, welche die Kompensation auf elektronischem Weg nachträglich erreicht und den Sensor somit auch praktisch nutzbar macht. Das in der US 5,729,143 beschriebene Verfahren arbeitet monofrequent. Erregerseitig wird ein magnetisches Wechselfeld einer bestimmten Frequenz f generiert und die induzierten Spannungskomponenten in den Detektorwindungen mit geeigneten, analogen und digitalen Filtern frequenzselektiv bei eben dieser Frequenz f ausgewertet werden. Die durch die magnetische Fehlkompensation von Detektor- und Erregersystem in den Detektorwindungen induzierte Spannung U(f) bei der Frequenz f verfügt über eine temperaturabhängige Amplitude und Phasenlage, die zudem zusätzlichen Exemplarstreuungen unterworfen ist. Das Verfahren der US 5,729,143 beruht nun darauf, analog zu der in den Detektorwindungen induzierten Spannungen eine Korrekturspannung hinzuzuaddieren, deren Amplitude und Phasenlage bei der Arbeitsfrequenz f die Fehlerspannung U(f) gerade kompensiert. Hierzu generiert ein Mikroprozessor bei der Frequenz f ein in Phase und Amplitude kontrolliertes digitales Korrektursignal. Die für die Kompensation erforderliche Amplitude und Phasenlage ist dabei von der Phasenverschiebung abhängig, welche durch die Bauelemente der Schaltungen im Erreger- und Detektorzweig hervorgerufen werden. Das erforderliche Korrektursignal ist damit aber u. a. auch einer Temperaturdrift unterworfen. Um auch bei Veränderungen der Arbeitstemperatur die Fehlerspannung U(f) kompensieren zu können, muss der Mikroprozessor die Phasenlage und Amplitude des Korrektursignals über die Temperatur nachführen. Hierzu ist in der Regel eine Rekalibrierung durch den Anwender erforderlich.

Eine alternative Methode zur Kompensation einer magnetischen Fehlkompensation ist aus der EP 1092989 A1 bekannt. Bei dieser Methode wird, anstatt, dass zur Detektionsspannung, welche in den Detektorwindungen induziert wird, eine Korrekturspannung hinzuaddiert wird, mit Korrekturmagnetfeldern gearbeitet. Hierzu wird das System der Magnetfelderregung nicht nur durch die primäre Erregerspule gebildet, sondern es werden zusätzlich Trimm-Windungen und sogenannte Korrekturwindungen hinzugefügt. Der Unterschied zwischen Trimm- und Korrekturwindung ist dabei der, dass die Korrekturwindungen mit der primären Erregerspule in Reihe geschaltet sind und somit immer mit dem gleichen Strom durchflossen werden, während die sogenannten Trimm-Windungen mit einem justierbaren Bruchteil des in den Korrektur- und Erregerspulen fließenden Stroms beschickt werden können. Auf diese Art kann erreicht werden, dass sich bei Abwesenheit metallischer Objekte in der Umgebung des Sensors in den Detektorspulen keine induzierte Spannung ergibt. Das Verfahren der EP 1092989 A1 hängt dabei wesentlich weniger von Bauelementetoleranzen und Driften in den Sende- und Empfangsschaltungen ab. Darüber hinaus ist die Messung nicht auf eine ausgewählte Arbeitsfrequenz begrenzt, da die Kompensation weitgehend unabhängig von der verwendeten Frequenz ist. Der Aufbau eines Sensors gemäß der EP 1092989 A1 wird demgegenüber jedoch wesentlich komplexer. Während der Sensor der US 5,729,143 mit nur je einer Spule für den Sende- und Empfangskreis auskommt, benötigt der Aufbau der EP 1022989 A1 im Erregerpfad zehn Spulen sowie vier Spulen für den Detektorpfad. Aus der DE 101 22 741 A1 ist ein Detektor zur Ortung metallischer Gegenstände bekannt, der eine Empfangsspule und eine erste Sendespule aufweist, die induktiv miteinander gekoppelt sind. Damit ein möglichst geringes Offset-Signal im Detektor entsteht, ist eine zweite Sendespule vorhanden, die ebenfalls mit der Empfangsspule induktiv gekoppelt ist. Die Empfangsspule und die beiden Sendespulen sind konzentrisch auf einer gemeinsamen Achse angeordnet, wobei die beiden Sendespulen bezüglich ihrer Windungszahlen und/oder ihrer Abmessungen so dimensioniert sind, dass sich die von den beiden Sendespulen in der Empfangsspule angeregten Flüsse gegenseitig kompensieren.

Die DE 40 00 018 A1 offenbart ein Sensorsystem mit starrem Verbund von rechteckigen Sende- und Empfangsspulen zur Durchführung elektromagnetischer Sondierungen. Zur Kompensation des primären Signals wird die Empfängerspule in Reihe mit einer rechteckigen Kompensationsspule geschaltet, die innerhalb der Sendespule angeordnet ist. Der starre Verbund aller Spulen des Systems der DE 40 00 018 A1 wird durch eine Trägerplatte aus Verbundfaserstoff erreicht, der auf einer Seite die Spulenwicklungen trägt. Damit sind die Sendespule und die Empfangsspule in der gleichen Ebene angeordnet.

Die US 4,786,696 offenbart einen Metalldetektor ("Schatzsucher"), mit einer Sendespule und zwei Empfangsspulen, bei dem die Sendespule koaxial zu den Empfangsspulen angeordnet ist und entweder in derselben Ebene liegt oder aber auch zu einer Empfangsspule höhenversetzt angeordnet sein kann.

In der Regel ist bei den Geräten des Standes der Technik jedoch vor dem Start einer jeden Ortungsmessung eine Kalibrierung des Sensors erforderlich, bei welcher der Offset bei Abwesenheit externer, metallischer Objekte vermessen wird und anschließend die Abweichung von diesem Referenzwert als Indikator für die Anwesenheit metallischer Gegenstände gewertet wird. Dieser zeit-raubende Kalibrierungsprozess beinhaltet zudem ein großes Fehler- und Schadens-potential bei Fehlbedienung eines Anwenders.

Der Erfindung liegt die Aufgabe zugrunde, ausgehend von den Detektoren des Stands der Technik einen Detektor der eingangs genannten Art anzugeben, welcher ein möglichst geringes Offset-Signal erzeugt, wobei eine Fehlplatzierung der Spulen einen möglichst geringen Einfluss auf den Offset hat.

Darüber hinaus ist es Aufgabe der Erfindung, eine Sensorgeometrie zu realisieren, deren Eigenschaften mit der Umgebungstemperatur sich nur geringfügig ändern, so dass auch ohne Kalibrierungsprozesse gute Messergebnisse mit einem solchen Detektor möglich werden.

Die der Erfindung zugrundeliegende Aufgabe wird gelöst durch einen Detektor zur Ortung metallischer Objekte mit den Merkmalen des Anspruchs 1.

### Vorteile der Erfindung

Der erfindungsgemäße Detektor zur Ortung metallischer Objekte weist eine Sendespule und zumindest zwei Empfangsspulen auf, die induktiv miteinander gekoppelt sind. Dabei sind die zumindest zwei Empfangsspulen koaxial zueinander, in einer Ebene angeordnet. Die dritte, als Sendespule arbeitende Spule befindet sich in einer dazu versetzten, d. h. in einer Z-Richtung verschobenen, parallelen zweiten Ebene. Benachbart , d.h. in der Nähe der Sendespule sind Kompensationswindungen mindestens einer Empfangsspule ausgebildet.

Dabei werden Anzahl und Position der jeweiligen Kompensationswindungen so dimensioniert, dass die Abhängigkeit der induzierten Spannung im Detektorspulensystem von einer Fehlpositionierung der Erregerspule in der Höhe, d. h. in Z-Richtung, möglichst genau kompensiert wird. Eine geringfügige Fehlpositionierung der Erregerspule in Z-Richtung wirkt sich auf die in den Empfangswicklungen in der Summe induzierte Spannung somit nicht mehr aus.

Bei einer solchen Detektorgeometrie ergibt sich eine deutlich reduzierte Toleranzempfindlichkeit bezüglich der Positionierung der Erregerspule in ihrer Höhe (Z-Richtung) über der Ebene der Empfangsspulen. Zusätzlich zu den Empfangswindungen der Empfangsspule im Außenbereich der Sendespule werden hierbei direkt unter der Erregerspule die Kompensationswindungen angeordnet.

Bei einer besonders vorteilhaften Ausführungsform des erfindungsgemäßen Detektors sind die Kompensationsspulen mit einem Höhenversatz in Z-Richtung und dabei insbesondere unterhalb der Sendespule angeordnet.

Zur genauen Einstellung der Kompensation der in den beiden Detektionsspulen induzierten Spannungen ist es erforderlich, zu berücksichtigen, dass die Detektorspulen nicht nur induktiv wirken, sondern ebenfalls einen nicht verschwindenden, kapazitiven Belag aufweisen. Detektorspulen für Ortungsgeräte werden üblicher Weise mit Hilfe von Kupferlackdraht gefertigt. Der Isolationslack besitzt typischer Weise nur eine geringe Dicke in der Größenordnung von einigen wenigen Mikrometern. Zwei nebeneinander liegende Wicklungen wirken somit nicht nur als Induktivität, sondern in einem gewissen Maße auch als Kondensator. Durch die geringe Isolationsdicke bei Verwendung von Lackdraht kann die parasitäre Kapazität nicht zu vernachlässigende Werte annehmen. Dies ist insbesondere bei mehrlagig gewickelten Spulen der Fall. Da zur Realisierung optimaler Kompensationsgeometrien die Bestimmung der Induktivität bis in die Größenordnung von einem ppm wichtig wird, kann der kapazitive Einfluss auch bei Verwendung von Frequenzen von lediglich einigen kHz nicht mehr vernachlässigt werden. Hierbei gilt zu beachten, dass die über die parasitären Kondensatoren schließenden Ströme innerhalb der anderen Windungen der Spule hochtransformiert werden und somit in Summe zu einer bedeutenden Störspannung führen können. Die parasitäre Kapazität ist dabei einer bedeutenden Temperaturdrift ausgesetzt, da die Dielektrizitätskonstante des Isolationslacks thermisch nicht stabil ist. Dies gilt insbesondere bei Verwendung sogenannten Backlacks.

Eine deutliche Reduzierung des störenden Kapazitätseffekts lässt sich beispielsweise dadurch erreichen, dass zur Isolation der einzelnen Kupferwindungen nicht Lack eingesetzt wird, sondern geeignete andere und vor allem dickere Isolationsmittel. Als besonders geeignet erscheint hierbei vor allem Papier, Baumwolle sowie Isolationskunststoffe, wie sie in Kabeln eingesetzt werden.

In vorteilhafter Weise sind die Empfängerspulen planar ausgebildet, d. h. mit lediglich einer einlagigen Wickelgeometrie versehen. Auf diese Weise ist es möglich, den Kapazitätsbelag der beiden Empfänger- bzw. Detektorspulen auf einfache Weise zu reduzieren. Die planare, einlagige Wickelgeometrie ermöglicht es, den Abstand von Windung zu Windung groß zu halten und damit den parasitären Kapazitätsbelag der Spulenwicklung zu reduzieren. Zudem sollte sichergestellt sein, dass der verbleibende Kapazitätsbelag thermisch invariant ist, so dass eine Temperaturdrift der parasitären Kapazität der Spule nicht auftreten kann.

In einer besonders vorteilhaften Ausführungsform des erfindungsgemäßen Detektors sind die Empfangsspulen als Printspulen auf einer Leiterplatte einer gedruckten Schaltung ausgebildet. In diesem Fall ergeben sich keine weiteren Kosten für die Fertigung der Detektorspulen. Die Ausführung der beiden Detektorspulen als Leiterbahnstrukturen auf einer Leiterplatte hat neben den nahezu verschwindenden Kosten weiterhin den Vorteil, dass die Dimensionstoleranz der Windungen sehr gering ist. Es bereitet technisch keine großen Probleme, Kupferstrukturen auf Leiterplatten mit einer Genauigkeit von 25 Mikrometern zu fertigen.
In einer vorteilhaften Weiterbildung des erfindungsgemäßen Detektors sind die Kompensationswindungen der Empfangsspulen auf zwei gegenüberliegenden Seitenflächen einer Leiterplatte ausgebildet. Hierbei werden die im und entgegen dem Uhrzeigersinn gewickelten Kompensationswindungen auf zwei Seiten der Leiterplatte aufgebracht. Dadurch, dass die innenliegenden Kompensationswindungspaare praktisch den gleichen Radius aufweisen, wird die Richtcharakteristik des Detektors bei großen Abständen zu metallischen Objekten nicht verfälscht. Auf diese Weise ist es möglich, die Kompensationswindungen unterhalb der Erregerspule anzuordnen, ohne dass die Richtcharakteristik des induktiven Sensors verfälscht wird.

In vorteilhafter Weise ist die Sendespule des erfindungsgemäßen Detektors auf einem Wickelkörper aufgebracht, der bei der Montage anschließend auf der Leiterplatte befestigt, beispielsweise aufgelötet oder eingeclipst wird. Die Wicklungen der Erregerspule befinden sich somit in einer bestimmten, definierten Höhe oberhalb der Leiterplatte und somit oberhalb der Ebene der Empfangsspulen. Der die Wicklungen der Sendespule tragende Wickelkörper dient somit in vorteilhafter Weise auch als Abstandshalter der Sendespule bzw. ihrer Wicklungen relativ zu den Empfangsspulen und garantiert somit einen definierten Abstand von Sende- und Empfangsspulen. In besonders vorteilhafter Weise wird die Erregerspule elektrisch über in ein Spritzgussteil eingelassene Kontaktstifte kontaktiert, welche in dafür vorgesehene Bohrungen auf der Leiterplatte verlötet werden. Um eine stabile mechanische Kontaktierung zu ermöglichen, ist es dabei hilfreich, mehr als die zwei elektrisch benötigten Kontaktstifte zu verwenden und beispielsweise ein oder zwei Blinde, d. h. elektrisch nicht kontaktierte Pins zusätzlich zu setzen. Auf diese Weise kann die Erregerspule durch einen Lötprozess auch mechanisch präzise fixiert werden.

Darüber hinaus reagiert diese gewickelte Erregerspule unempfindlich auf Fehlplatzierungen, so dass die Toleranzanforderungen bei der Herstellung und dem Zusammenbau des Detektors in dieser Hinsicht reduziert werden können.

Ein Detektor zur Ortung metallischer Objekte mit der erfindungsgemäßen Sensorgeometrie benötigt somit in vorteilhafter Weise nur eine einzelne gewickelte und damit teuere Erregerspule und macht weitere gewickelte Sensorspulen überflüssig. Darüber hinaus weist der erfindungsgemäße Detektor eine gute Richtwirkung der Detektion auf und zeigt nur ein geringfügige Driftverhalten bei Temperaturänderungen. Die erfindungsgemäße Sensorgeometrie mit ihren dargelegten Vorteilen ermöglicht somit insbesondere einen Detektor, der ohne regelmäßigen Kalibrierungsprozess gute Messergebnisse liefert.

Darüber hinaus lässt sich eine solche Detektorvorrichtung in oder an einer Werkzeugmaschine, beispielsweise einem Bohrwerkzeug integrieren, um dem Anwender dieser Maschine ein sicheres Bohren zu ermöglichen. So kann der Sensor beispielsweise in einem Bohr- oder Meißelwerkzeug integriert werden oder als ein mit einem solchen Werkzeug verbindbares Modul ausgebildet sein. Als ein möglicher Einbauort für den erfindungsgemäßen Sensor bietet sich in vorteilhafter Weise auch eine Absaugevorrichtung für Staub an, die mit der Werkzeugmaschine verbunden ist, oder mit dieser verbindbar ist, und funktionsbedingt in der Nähe einer zu bearbeitenden Wand zum Einsatz kommt.

### Zeichnung

In der Zeichnung sind Ausführungsbeispiele des erfindungsgemäßen Detektors dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls in der Beschreibung offenbart anzusehen sind.

Es zeigen:
- Fig. 1: den prinzipiellen Aufbau einer Sensorgeometrie eines Detektors zur Ortung metallischer Objekte nach dem Stand der Technik in einer schematisierten Darstellung,
- Fig. 2: ein erstes Ausführungsbeispiel der Spulenanordnung des erfindungsgemäßen Detektors in einer vereinfachten Darstellung,
- Fig. 3: eine schematisisierte Darstellung des funktionalen Zusammenhangs der im Empfängersystem induzierte Spannung U_{E} als Funktion der Position Z der Sendespule oberhalb der Ebene der Empfängerspulen,
- Fig. 4: ein zweites Ausführungsbeispiel der Spulenanordnung des erfindungsgemäßen Detektors in einer zu Fig. 2 analogen Darstellung.

### Beschreibung der Ausführungsbeispiele

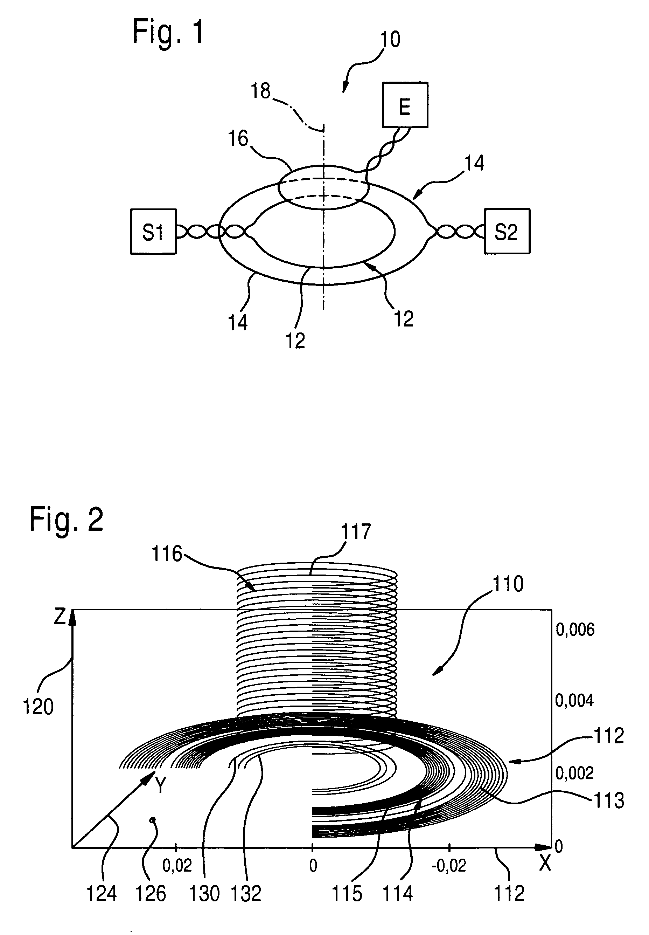

Fig. 1 zeigt den prinzipiellen Aufbau eines Detektors zur Ortung metallischer Gegenstände nach dem Stand der Technik. Ein solcher Detektor weist in seiner Sensorgeometrie 10 drei Spulen auf. Eine erste Sendespule 12, die an einen ersten Sender S1 angeschlossen ist, eine zweite Sendespule 14, die an einen zweiten Sender S2 angeschlossen ist, und eine Empfangsspule 16, die an einem Empfänger E angeschlossen ist. Jede Spule ist hier als kreisförmige Linie dargestellt. Die Besonderheit der Anordnung dieser drei Spulen 12, 14, 16 besteht darin, dass sie alle konzentrisch zu einer gemeinsamen Achse 18 angeordnet sind. Dabei haben die einzelnen Spulen 12, 14, 16 unterschiedliche Außenabmessungen, so dass die Spule 12 in die Spule 14 koaxial zur Achse 18 einsetzbar ist.

Die beiden Sendespulen 12 und 14 werden von ihren Sendern S1 und S2 mit Wechselströmen entgegengesetzter Phase gespeist. Damit induziert die erste Sendespule 12 in der Empfangsspule 16 einen Fluss, der dem von der zweiten Sendespule 14 in der Empfangsspule 16 induzierten Fluss entgegengesetzt gerichtet ist. Beide in der Empfangsspule 16 induzierten Flüsse kompensieren sich gegenseitig, so dass der Empfänger E kein Empfangssignal in der Empfangsspule 16 detektiert, falls sich kein externer, metallischer Gegenstand in der Nähe der Spulenanordnung 10 befindet. Der von den einzelnen Sendespulen 12 bzw. 14 in der Empfangsspule 16 erregte Fluss φ hängt von verschiedenen Größen ab, wie beispielsweise der Windungszahl und der Geometrie der Spulen 12 bzw. 14 und von den Amplituden der in die beiden Sendespulen 12 bzw. 14 eingespeisten Ströme sowie der gegenseitigen Phasenlage dieser Ströme.

Diese Größen sind bei den Detektoren des Standes der Technik letztendlich so zu optimieren, dass bei Abwesenheit eines metallischen Gegenstands in der Empfangsspule 16, bei stromdurchflossenen Sendespulen 12 bzw. 14 kein Fluss bzw. ein möglichst geringer Fluss φ angeregt wird. Bei der Spulenanordnung 10 gemäß Fig. 1 sind die erste Sendespule 12, die an den ersten Sender S1 angeschlossen ist und eine zweite Sendespule 14, die an einen zweiten Sender S1 angeschlossen ist koaxial zueinander in einer gemeinsamen Ebene angeordnet. Die Empfangsspule 16 ist in einer gegenüber den beiden Sendespulen 12 und 14 versetzten Ebene angeordnet.

Fig. 2 zeigt ein erstes Ausführungsbeispiel einer Sensorgeometrie 110 eines erfindungsgemäßen Detektors zur Ortung metallischer Objekte. Dieser optimierte Aufbau für eine Sensorgeometrie verringert die Toleranzempfindlichkeit bezüglich der Positionierung der Erregerspule in der Höhe. Die Sensorgeometrie 110 gemäß Fig. 2 weist zwei Empfängerspulen 112 bzw. 114 auf, die in einer gemeinsamen Ebene 126 koaxial zueinander angeordnet sind. Mit einem gewissen Abstand z über dieser gemeinsamen Empfängerebene 126 befindet sich eine Sensorspule 116, die ebenfalls koaxial zu der Empfängerspule 112 bzw. der Empfängerspule 114 angeordnet ist.

Die Empfängerspulen 112 bzw. 114 besitzen eine planare, einlagige Wickelgeometrie. Eine solche Ausbildung der Empfängerspulen 112, 114 eröffnet die Möglichkeit, den Kapazitätsbelag der beiden Empfängerspulen auf einfache Weise zu reduzieren. Hierbei ist es möglich, den Abstand von Windung zu Windung groß und damit den parasitären Kapazitätsbelag der Spulenwicklung klein zu halten. Zur Isolation der einzelnen Kupferwindungen kann beispielsweise nicht, wie üblicherweise vorgsehenn, ein Lack eingesetzt werden, sondern geeignete, andere und vor allem dickere Isolationsmittel. Als geeignet erscheinen vor allem Papier, Isolationskunststoffe, wie sie bei Kabeln eingesetzt werden. Eine weitere Methode zur Verringerung des Kapazitätsbelages besteht darin, Mehrkammer-Wicklungen für die Spulen 112 bzw. 114 zu benutzten.

Bei Verwendung einer planaren Geometrie ist es insbesondere auch möglich, die beiden Empfängerspulen 112 bzw. 114 als Printspulen auf der Leiterplatte einer gedruckten Schaltung zu realisieren. In diesem Fall fallen keine wesentlichen Kosten für die Fertigung der beiden Empfängerspulen an. Die Ausführung der beiden Empfängerspulen 112 bzw. 114 als Leiterbahnstrukturen auf einer Leiterplatte hat neben den verschwindenden Kosten zudem den Vorteil, dass die Dimensionstoleranz der Windungen sehr gering ist. Es bereitet technisch keinerlei Probleme, Kupferstrukturen auf Leiterplatten bis auf 25 Mikrometer genau zu fertigen.

Fig. 2 zeigt einen solchen Aufbau in schematischer Weise. Hierbei ist zur besseren Sichtbarkeit die Z-Achse 120 relativ zu den X- und Y-Achsen 122 bzw. 124 gedehnt. Zur Verdeutlichung dieser Darstellung befinden sich entsprechende Maßzahlen an den jeweiligen Achsen, die jedoch keine Absolutwerte, sondern lediglich die relative Größe der Skalierung der einzelnen Achsen in diesem Ausführungsbeispiel in beliebigen Einheiten vermitteln soll. Weiterhin wurde in Fig. 2 zur besseren Sichtbarkeit der Querschnitte jeweils ein Segment aus den Spulen ausgeschnitten.

In einer Ebene 126, die eine nicht weiter dargestellte Leiterplatte symbolisieren soll, und in Figur 2 von der X-Achse 122 und der Y-Achse 124 aufgespannt wird, liegen die beiden Detektorspulen 112 bzw. 114. Diese Ebene 126 kann dabei beispielsweise der Ober- oder der Unterseite der Leiterplatte entsprechen. Die Windungen 115 der Empfängerspule 114 sind dabei beispielsweise im Uhrzeigersinn gewickelt, während die weiter außen liegenden Windungen 113 der Empfängerspule 112 entgegen dem Uhrzeigersinn orientiert. Die in diesen Windungen 113, 115 induzierten Spannungen haben somit entgegengesetztes Vorzeichen und kompensieren sich bei geeigneter Dimensionierung im Falle der Abwesenheit externer metallischer Objekte vollständig.

Oberhalb der Ebene 126 der Leiterplatte, d.h. in Z-Richtung 120 versetzt, befindet sich eine Erreger- bzw. Sendespule 116. Besonders vorteilhaft ist es, wenn die Sendespule auf einem Wickelkörper gefertigt wird, der anschließend auf die Leiterplatte 126 aufgelötet wird. Die Wicklungen 117 der Sendespule 116 befinden sich somit in einer bestimmten, vordefinierten Höhe z oberhalb der Leiterplattenebene 126. Wegen der erforderlichen Stabilität ist die Fertigung von Wickelkörpern mit Wandstärken unterhalb von einem Millimeter kritisch. Daher sind Abstände von einem Millimeter und mehr zwischen Leiterplatte und Sendespule 116 anzustreben.

Der in Fig. 2 gezeigte Aufbau ist bezüglich einer Fehlpositionierung der Sendespule 116 in radialer, d. h. X- bzw. Y-Richtung 122 bzw. 124 wenig kritisch, wie dies im Stand der Technik, beispielsweise in der DE 10122741 A1 aufgezeigt worden ist. Zur zusätzlichen Kompensation von Fehlpositionierungen in Z-Richtung 120 weist die erfindungsgemäße Sensorgeometrie 110 gemäß Fig. 2 zusätzlich zu den aus dem Stand der Technik bekannten Empfangswindungen 115 bzw. 113, die im Außenbereich des Sensors angeordnet sind, direkt unter der Sendespule 116 Kompensationswindungen 130 bzw. 132 auf. Im Ausführungsbeispiel der Fig. 2 bestehen diese Kompensationswicklungen aus zwei Windungen 132 im und einer Windung 130 entgegen dem Uhrzeigersinn. Zudem kann die Kompensationswirkung durch die Anpassung der Radien der Kompensationswindungen 130 bzw. 132 optimiert werden. Anzahl und Position der Kompensationswindungen sind dabei so dimensioniert, dass die Abhängigkeit der induzierten Spannung im Empfängerspulensystem 114 mit Empfangswindungen 115 und Kompensationswindungen 130 bzw. im Empfängerspulensystem 112 mit Empfangswindungen 113 und Kompensationswindungen 132 bezüglich einer Fehlpositionierung der Sendespule 116 in z-Richtung 120 kompensiert wird. Die Kompensationswindungen 130 bzw. 132 sind unterhalb der Sendespule 116 in der gleichen Ebene 126 angeordnet, wie die Empfangsspulen 112 und 114 und verlaufen zu diesen koaxial. Die Radien der Kompensationswindungen 130 bzw. 132 sind daher unterschiedlich jedoch kleiner gewählt als die Radien der Empfängerspulen 112 und 114, so dass die Kompensationswindungen 130 bzw. 123 nahezu unter der Sendespule 116 liegen. Die Kompensationswindungen können dadurch ebenfalls als Printstrukturen auf der gemeinsamen Leiterplatte realisiert werden. Radien für die Kompensationsspulen 130 bzw. 132 können jedoch auch größer oder kleiner sein, als der Radius der Windungen 117 der Sendespule 116.

Diese Kompensation geschieht dadurch, dass der aufgrund der größeren Entfernung geringere Einfluss der Fehlpositionierung der Sendespule 116 auf das Windungssystem 113 der Empfangsspule 112 dadurch ausgeglichen wird, dass in sehr geringem Abstand unter der Sendespule 116 ebenfalls Empfängerkompensationswindungen 132 der Empfangsspule 112 gesetzt sind. Diese Kompensationswindungen 132 werden von einer Verschiebung der Sendespule 116 um so mehr beeinflusst. Eine geringfügige Fehlpositionierung der Sendespule 116 wirkt sich auf die in den Empfangswicklungen in der Summe, d. h. einschließlich ihrer Kompensationswindungen 130 und 132, induzierte Spannung somit nicht mehr aus. Dies gelingt idealer Weise selbstverständlich nur für ein enges Fenster im Bereich der eigentlich vorgesehenen Z-Position der Sendespule 116. Die Forderung an die Fertigungstoleranz der Wandstärke eines Wickelkörpers für die Sendespule 116 kann so beispielsweise auf realisierbare +/- 0,1 mm verringert werden.

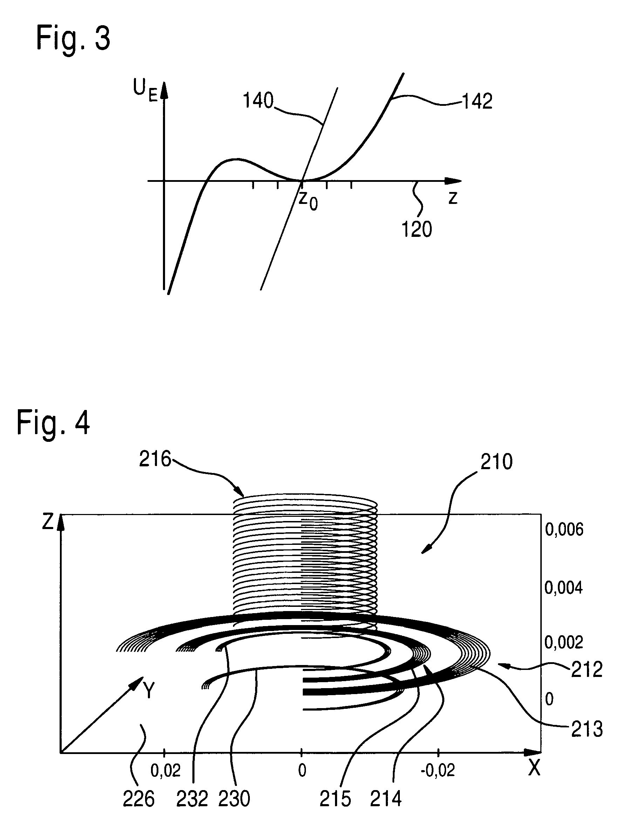

Dieser Zusammenhang ist schematisch in Fig. 3 dargestellt, welcher die im EmpfängerSystem induzierte Spannung U_{E} als Funktion der Position z der Sendespule 116 oberhalb der Ebene 126 der Leiterplatte zeigt. Die Kurve 140 zeigt die Änderung der induzierten Spannung im Empfängerkreis als Funktion der Verschiebung der Sendespule bei einer Sensorgeometrie ohne erfindungsgemäße Kompensationswicklungen. Die Kurve 142 gibt den prinzipiellen Verlauf dieser funktionalen Abhängigkeit mit optimierter Anzahl und Position von Kompensationswindungen für das Empfängersystem entsprechend der Erfindung wieder. Im Bereich der vorgesehenen Position z₀ der Sendespule 116 weist die induzierte Spannung U_{E} als Funktion der z-Position 120 der Sendespule 116 eine lokale Null-Stelle zweiter Ordnung auf, so dass sich eine wesentlich reduzierte Toleranzanforderung für die Positionierung der Sendespule 116 in z-Richtung ergibt. Die so erreichte höhere Fertigungsfreundlichkeit bei einer Sensorgeometrie 110 gemäß dem Ausführungsbeispiel der Fig. 2 wird jedoch dadurch erkauft, dass durch das Hinzufügen der Kompensationswindungen 130 bzw. 132 unterhalb der Erregerspule 116 die Richtcharakteristik des induktiven Sensors negativ beeinflusst wird.

Fig. 4 zeigt in einem alternativen Ausführungsbeispiel einer Sensorgeometrie 210 für den erfindungsgemäße Detektor zur Ortung metallischer Objekte einen Kompensationsaufbau, welcher das Problem der verfälschten Richtcharakteristik deutlich verbessert. Bei diesem Ausführungsbeispiel werden die im bzw. entgegen dem Uhrzeigersinn gewickelten Kompensationswindungen 230 bzw. 232 auf zwei unterschiedlichen Seiten beispielsweise einer Leiterplatte, die durch die Ebene 226 angedeutet sein soll, aufgebracht. Eine solche Leiterplatte muss dabei also mindestens zweilagig ausgeführt werden. Dadurch, dass die innenliegenden Kompensationswindungspaare dann mit nahezu gleichem Radius ausgebildet werden können, wird die Richtcharakteristik des Sensors bei großen Abständen zu metallischen Objekten nicht mehr verfälscht. Da der Radius der Kompensationswindungen 230 bzw. 232 nun nahezu gleich ist, wird deren jeweilige Windungszahl genutzt, um eine optimierte Anpassung der Positionierungstoleranz für die Sendespule 216 zu ermöglichen.

Die verbesserte Richtcharakteristik des erfindungsgemäßen Detektors gemäß Figur 4 kann man sich anschaulich durch das folgende qualitative Argument erklären. Würde man die Empfängerwindungen 215 und 230 bzw. 213 und 232 bestromen, so wird durch die innen liegenden und auf die Ober- und Unterseite der Leiterplatte 226 verteilten Kompensationswindungen 230 bzw. 232 eine Fehlcharakteristik generiert, welche in guter Näherung einem magnetischen Quadropol entspricht. Das Feld verschwindet in Abständen, die groß zum Abstand der beiden Kompensationswicklungssysteme 230 bzw. 232 auf Ober- und Unterseite der Leiterplatte 226 sind, somit mit zunehmender Distanz sehr schnell. Bereits in einem Abstand von ungefähr einem Zentimeter zur Leiterplatte tragen die innen liegenden Kompensationswindungen 230 und 232 nicht mehr merklich zum Gesamtmagnetfeld bei. Diese für die Nutzung der Empfangswindungen zur Magnetfelderzeugung gültigen Überlegungen lassen sich auch auf die sich ergebenden Empfangscharakteristiken übertragen.

Während die Kompensationswindungen 230 bzw. 232 gemäß Fig. 4 nur zu einer geringfügigen Deformation der Empfangscharakteristik führen, ist ihr Einfluss auf die in den Empfangswindungen 215 bzw. 213 induzierte Spannung nicht zu vernachlässigen.

Die Sendespule 216 befindet sich in einem Abstand von ca. 1 mm oberhalb der Leiterplatte, wobei dieser Abstand in etwa gleich groß ist, wie die Dicke der Leiterplatte selbst.

Durch Anwendung dieser Kompensationsmaßnahmen ist es möglich, die Anforderungen an die Mechaniktoleranzen des Wickelkörpers der Erregerspule noch weiter zu reduzieren. In besonders vorteilhafter Weise wird die Erregerspule elektrisch über in ein Spritzgussteil eingelassene Kontaktstifte kontaktiert, welche in dafür vorgesehene Bohrungen auf der Leiterplatte des Detektors verlötet werden. Um eine stabile mechanische Kontaktierung zu ermöglichen, ist es hilfreich, mehr als die zwei elektrisch benötigten Kontaktstifte zu verwenden, beispielsweise indem ein oder zwei blinde, d. h. elektrisch nicht kontaktierte Pins zusätzlich hinzugefügt werden. Auf diese Art und Weise kann die Erregerspule durch den Lötprozess auch mechanisch präzise fixiert werden.

Der erfindungsgemäße Detektor zur Ortung metallischer Objekte mit den vorgestellten Detektorgeometrien ermöglicht es in vorteilhafter Weise, dass lediglich eine einzelne gewickelte und daher teuere Sendespule benötigt wird. Weitere gewickelte Sensorspulen sind somit überflüssig. Darüber hinaus ermöglicht die vorgestellte Sensorgeometrie eine gute Richtwirkung der Detektion bei deutlich reduzierten Anforderungen an die Fertigungstoleranzen bezüglich einer Fehlplatzierung insbesondere der Sendespule. Aufgrund der erfindungsgemäßen Ausgestaltung der Sensorgeometrie liefert der erfindungsgemäße Detektor zur Ortung metallischer Objekte auch ohne Kalibrierprozess gute Messergebnisse.

Der erfindungsgemäße Detektor zur Ortung metallischer Objekte ist nicht auf die in den Figuren dargestellten Ausführungsbeispiele beschränkt.

Insbesondere ist der erfindungsgemäße Detektor nicht beschränkt auf kreisförmige Spulen. Abweichend von den in den Figuren dargestellten Spulenanordnungen kann jede Spule oder einzelne Spulen eine vom Kreis abweichende Form haben und aus einer oder auch mehreren Windungen bestehen.

Der erfindungsgemäße Detektor zur Ortung metallischer Gegenstände ist nicht auf die Verwendung einer Sendespule und zweier Empfangsspulen begrenzt.

## Patentansprüche

1. Detektor zur Ortung metallischer Objekte, mit einer Sendespule (116, 216) und zumindest zwei Empfangsspulen (112, 114; 212, 214), die induktiv miteinander gekoppelt sind, wobei die mindestens zwei Empfangsspulen (112, 114; 212, 214) koaxial zueinander, in einer ersten Ebene (126, 226) angeordnet sind und die Sendespule (116, 216) in einer dazu höhenversetzten, parallelen Ebene angeordnet ist, **dadurch gekennzeichnet, dass** benachbart zu der Sendespule (116, 216) zusätzliche Kompensationswindungen (130, 132; 230, 232) mindestens zweier Empfangsspulen (112, 114; 212, 214) ausgebildet sind, wobei die Kompensationswiridungen (130, 132; 230, 232) mit einem Höhenversatz zur Sendespule (116,216) angeordnet sind und die Kompensationswindungen (130,132;230,232) zweier Empfangsspulen (112,114; 212,214) in zwei zueinander höhenversetzten Ebenen ausgebildet sind.

2. Detektor nach Anspruch 1, **dadurch gekennzeichnet, dass** Anzahl und Position der Kompensationswindungen (130,132;230,232) so dimensioniert sind, dass die Abhängigkeit der in die Empfangsspulen (112,114;212,214) induzierten Spannung U_{E} von einer Höhenfehlpositionterung (Δz) der Sendespule (116, 216) gerade kompensiert wird.

3. Detektor nach Anspruch 1 oder 2, **dadurch gekennzeichnet, dass** die Kompensationswindungen (130,132;230,232) als Printspulen auf einer Leiterplatte (126,226) ausgebildet sind.

4. Detektor nach Anspruch 1, **dadurch gekennzeichnet, dass** die Empfangsspulen (112,114;212,214) planar ausgebildet sind.

5. Detektor nach Anspruch 1 oder 4, **dadurch gekennzeichnet, dass** die Empfangsspulen (112,114;212,214) als Printspulen auf einer Leiterplatte (126,226) ausgebildet sind.

6. Detektor nach Anspruch 5, **dadurch gekennzeichnet, dass** die Kompensationswindungen (130,132;230,232) zweier Empfangsspulen (112,114;212,214) auf zwei gegenüberliegenden Seitenflächen einer Leiterplatte (126,226) ausgebildet sind.

7. Detektor nach einem der vorhergehenden Ansprüche, **dadurch gekennzeichnet, dass** die Kompensationswindungen (130,132;230,232) zweier Empfangsspulen (112,114; 212,214) im wesentlichen den gleichen Radius aufweisen.

8. Detektor nach Anspruch 1, **dadurch gekennzeichnet, dass** die Sendespule (116,216) auf einem Wickelkörper aufgebracht ist

9. Detektor nach Anspruch 8, **dadurch gekennzeichnet, dass** der Wickelkörper auf einer Leiterplatte (126,226) befestigt ist.

10. Detektor nach Anspruch 9, **dadurch gekennzeichnet, dass** der Wickelkörper als Abstandshalter der Sendespule (116,216) zur Ebene der Empfangsspulen (112,114; 212,214) ausgebildet ist.

11. Messgerät, insbesondere ein handgehaltenes Ortungsgerät, mit zumindest einem Detektor nach einem oder mehreren der Ansprüche 1 bis 10.

12. Werkzeuggerät, insbesondere ein Bohr- oder Meißelwerkzeug, mit einem Detektor nach einem oder mehreren der Ansprüche 1 bis 10.

## Claims

1. Detector for locating metallic objects, having a transmit coil (116, 216) and at least two receive coils (112, 114; 212, 214) which are inductively coupled to one another, the at least two receive coils (112, 114; 212, 214) being arranged coaxially with one another in a first plane (126, 226) and the transmit coil (116, 216) being arranged in a plane parallel thereto and offset in height, **characterized in that** additional compensation windings (130, 132; 230, 232) of at least two receive coils (112, 114; 212, 214) are formed next to the transmit coil (116, 216), the compensation windings (130, 132; 230, 232) being arranged with an offset in height relative to the transmit coil (116, 216), and the compensation windings (130, 132; 230, 232) of two receive coils (112, 114; 212, 214) being formed in two planes offset in height from one another.

2. Detector according to Claim 1, **characterized in that** the number and position of the compensation windings (130, 132; 230, 232) are dimensioned such that the dependence of the voltage U_{E} induced in the receive coils (112, 114; 212, 214) on a height mis-positioning (Δz) of the transmit coil (116, 216) is exactly compensated.

3. Detector according to Claim 1 or 2, **characterized in that** the compensation windings (130, 132; 230, 232) are designed as printed circuit coils on a printed circuit board (126, 226).

4. Detector according to Claim 1, **characterized in that** the receive coils (112, 114; 212, 214) are of planar design.

5. Detector according to Claim 1 or 4, **characterized in that** the receive coils (112, 114; 212, 214) are designed as printed circuit coils on a printed circuit board (126, 226).

6. Detector according to Claim 5, **characterized in that** the compensation windings (130, 132; 230, 232) of two receive coils (112, 114; 212, 214) are formed on two opposite lateral surfaces of a printed circuit board (126, 226).

7. Detector according to one of the preceding claims, **characterized in that** the compensation windings (130, 132; 230, 232) of two receive coils (112, 114; 212, 214) have substantially the same radius.

8. Detector according to Claim 1, **characterized in that** the transmit coil (116, 216) is mounted on a winding former.

9. Detector according to Claim 8, **characterized in that** the winding former is fastened on a printed circuit board (126, 226).

10. Detector according to Claim 9, **characterized in that** the winding former is designed as a spacer of the transmit coil (116, 216) from the plane of the receive coils (112, 114; 212, 214).

11. Measuring device, in particular a hand-held locating device, having at least one detector according to one or more of Claims 1 to 10.

12. Tool, in particular a drilling or chiselling tool, having a detector according to one or more of Claims 1 to 10.

## Revendications

1. Détecteur pour localiser des objets métalliques, comprenant une bobine d'émission (116, 216) et au moins deux bobines de réception (112, 114 ; 212, 214) qui sont couplées inductivement entre elles, les au moins deux bobines de réception (112, 114 ; 212, 214) étant disposées de manière coaxiale l'une par rapport à l'autre dans un premier plan (126, 226) et la bobine d'émission (116, 216) étant disposée dans un plan parallèle décalé en hauteur par rapport à celui-ci, **caractérisé en ce que** des enroulements de compensation (130, 132 ; 230, 232) supplémentaires d'au moins deux bobines de réception (112, 114 ; 212, 214) sont formés à côté de la bobine d'émission (116, 216), les enroulements de compensation (130, 132 ; 230, 232) étant disposés avec un décalage en hauteur par rapport à la bobine d'émission (116, 216) et les enroulements de compensation (130, 132 ; 230, 232) des deux bobines de réception (112, 114 ; 212, 214) étant formés dans deux plans décalés en hauteur l'un par rapport à l'autre.

2. Détecteur selon la revendication 1, **caractérisé en ce que** le nombre et la position des enroulements de compensation (130, 132 ; 230, 232) sont dimensionnés de telle sorte que la dépendance de la tension U_{E} induite dans les bobines de réception (112, 114 ; 212, 214) à une erreur de positionnement en hauteur (Δz) de la bobine d'émission (116, 216) est tout juste compensée.

3. Détecteur selon la revendication 1 ou 2, **caractérisé en ce que** les enroulements de compensation (130, 132 ; 230, 232) sont réalisés sous la forme de spires imprimées sur une carte électronique (126, 226).

4. Détecteur selon la revendication 1, **caractérisé en ce que** les bobines de réception (112, 114 ; 212, 214) sont de forme plane.

5. Détecteur selon la revendication 1 ou 4, **caractérisé en ce que** les bobines de réception (112, 114 ; 212, 214) sont réalisées sous la forme de spires imprimées sur une carte électronique (126, 226).

6. Détecteur selon la revendication 5, **caractérisé en ce que** les enroulements de compensation (130, 132 ; 230, 232) des deux bobines de réception (112, 114 ; 212, 214) sont réalisés sur deux faces latérales opposées d'une carte électronique (126, 226).

7. Détecteur selon l'une des revendications précédentes, **caractérisé en ce que** les enroulements de compensation (130, 132 ; 230, 232) des deux bobines de réception (112, 114 ; 212, 214) présentent sensiblement le même rayon.

8. Détecteur selon la revendication 1, **caractérisé en ce que** la bobine d'émission (116, 216) est montée sur un corps de bobinage.

9. Détecteur selon la revendication 8, **caractérisé en ce que** le corps de bobinage est fixé sur une carte électronique (126, 226).

10. Détecteur selon la revendication 9, **caractérisé en ce que** le corps de bobinage est réalisé sous la forme d'une entretoise de la bobine d'émission (116, 216) par rapport au plan des bobines de réception (112, 114 ; 212, 214).

11. Appareil de mesure, notamment appareil de localisation tenu à la main, comprenant au moins un détecteur selon une ou plusieurs des revendications 1 à 10.

12. Outillage, notamment outil de perçage ou de burinage, comprenant un détecteur selon une ou plusieurs des revendications 1 à 10.
